(19) Europäisches Patentamt / European Patent Office / Office européen des brevets

(11) **EP 2 988 919 B1**

(12) **EUROPÄISCHE PATENTSCHRIFT**

(45) Veröffentlichungstag und Bekanntmachung des Hinweises auf die Patenterteilung:
**14.06.2017   Patentblatt 2017/24**

(21) Anmeldenummer: **14717782.8**

(22) Anmeldetag: **15.04.2014**

(51) Int Cl.:
**B29C 65/08** (2006.01)     **B65D 75/58** (2006.01)

(86) Internationale Anmeldenummer:
**PCT/EP2014/057635**

(87) Internationale Veröffentlichungsnummer:
**WO 2014/173735 (30.10.2014 Gazette 2014/44)**

(54) **ULTRASCHALLSCHWEISSVORRICHTUNG MIT MEHREREN SONOTRODEN**

ULTRASONIC WELDING APPARATUS HAVING A PLURALITY OF SONOTRODES

DISPOSITIF DE SOUDAGE PAR ULTRASONS ÉQUIPÉ DE PLUSIEURS SONOTRODES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2013   DE 102013104227**

(43) Veröffentlichungstag der Anmeldung:
**02.03.2016   Patentblatt 2016/09**

(73) Patentinhaber: **Herrmann Ultraschalltechnik GmbH & Co. KG**
**76307 Karlsbad (DE)**

(72) Erfinder:
• **SCHNEIDER, Arnold**
**76275 Ettlingen-Schluttenbach (DE)**

• **GNAD, Gerhard**
**75210 Keltern-Weiler (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
EP-A1- 0 661 208          EP-A1- 2 263 860
DE-A1-102010 028 932      JP-A- H07 323 478
JP-A- S59 178 215

• **JIROMARU TSUJINO: "Studies on Ultrasonic Plastic Welding with Two Longitudinal Vibration Systems", JAPANESE JOURNAL OF APPLIED PHYSICS,, Bd. 24, Nr. 24, 1. Januar 1985 (1985-01-01), Seiten 172-174, XP001354226,**

**Beschreibung**

Die vorliegende Erfindung betrifft eine Ultraschallschweißvorrichtung zur Ultraschallbearbeitung eines Materials mit mindestens zwei Sonotroden.

Ultraschall ist eine mechanische Schwingung oberhalb der Hörgrenze. Der Frequenzbereich beginnt bei etwa 20 KHz und erstreckt sich bis zu Frequenzen von 1 GHz. Solche Ultraschallfrequenzen werden häufig mit Hilfe von piezoelektrischen Schallwandlern (Konverter) aus elektrischer Energie erzeugt. Diese mechanische Schwingungsenergie wird über die mit dem Konverter, gegebenenfalls über ein Amplitudentransformationsstück (auch Booster genannt) verbundene Sonotrode auf das Werkstück bzw. das zu bearbeitende Material aufgebracht.

Die Fläche der Sonotrode, die dafür vorgesehen ist, mit dem zu bearbeitenden Material in Kontakt zu treten, wird auch als Siegelfläche bezeichnet. Die Schwingeinheit besteht somit aus Generator, Konverter, gegebenenfalls dem Amplitudentransformationsstück und der Sonotrode. Für manche Anwendungsfälle sind Amplitudentransformator und Sonotrode einstückig ausgebildet.

Um die Ultraschallschwingung mit Hilfe der Ultraschallschwingeinheit effektiv zu übertragen, ist es notwendig, die Ultraschallschwingeinheit in eine Resonanz zu bringen. Abhängig von dem Aufbau der Ultraschallschwingeinheit weist diese eine Vielzahl von Eigenfrequenzen auf. Nur wenn der Konverter eine Eigenfrequenz der Ultraschallschwingeinheit erzeugt, kommt es zu einer resonanten Schwingung der Ultraschallschwingeinheit. Daher müssen Konverter und Ultraschallschwingeinheit aufeinander abgestimmt werden.

Bei der Bearbeitung von Materialien mittels Ultraschall wird in der Regel das zu bearbeitende Material zwischen der Sonotrode und einem (nicht zum Schwinggebilde gehörenden) Gegenwerkzeug, welches auch Amboss genannt wird, positioniert. Die mit dem zu bearbeitenden Material in Kontakt stehende Sonotrode überträgt dann die Ultraschallenergie auf das zu bearbeitende Material, welches dadurch beispielsweise verschweißt oder abgetrennt wird.

Dabei wird Energie an der Siegelfläche auf das zu bearbeitende Material übertragen. Das zu bearbeitende Material wird dadurch ebenfalls in Schwingung gesetzt, so dass auch an der Fläche, an der das zu bearbeitende Material das Gegenwerkzeug berührt, ein Energieübertrag auftreten kann.

Auch wenn das zu bearbeitende Material aus mehreren Elementen besteht, z. B. 2-lagig ist, kommt es aufgrund der von der Sonotrode auf die erste Lage übertragene Schwingung ebenfalls im Grenzbereich zwischen 1. und 2. Lage zu einem Energieübertrag. Insbesondere bei dickeren Materialien, die nicht oder nur unzureichend durch die Sonotrode in Schwingung versetzt werden können, reicht jedoch der Energieübertrag zwischen Gegenwerkzeug und zu bearbeitendem Material für eine effektive Verschweißung oftmals nicht aus.

Daher ist bereits in der WO 2010/145927 eine Bearbeitung von Materialbahnen mit zwei identischen Sonotroden vorgeschlagen worden. Die beiden Sonotroden sind dabei derart angeordnet, dass das zu bearbeitende Material während der Bearbeitung zwischen diesen angeordnet wird und so gleichzeitig von den beiden Sonotroden bearbeitet werden kann.

Nach der bekannten Bearbeitung werden jedoch die beiden Sonotroden mit exakt der gleichen Ultraschallfrequenz angeregt, was zu einer unerwünschten Beeinflussung der einen Sonotrode durch die andere Sonotrode und umgekehrt führen kann.

Aus der EP 2 263 860 A1 ist eine Ultraschallsiegelbacke, eine Vorrichtung und ein Verfahren zum Versiegeln von Kunststofffollienabschnitten bekannt. Die Siegelbacke weist einen konkaven Abschnitt sowie einen flachen Abschnitt auf. Zwei derartige Siegelbacken können gegenüberliegend zueinander angeordnet werden, um eine Kunststofffolie schlauchförmig zu verschweißen.

Aus der JP S59 178215 A ist eine Vorrichtung zum Ultraschallverschweißen bekannt, bei der zwei Siegelbacken gegenüberliegend zueinander angeordnet sind.

Die EP 0 661 208 A1 und die JP H07 323478 gehören zu einer Patentfamilie und betreffen ein Verfahren und eine Vorrichtung zum Herstellen eines mit einem Einfüllstutzen versehenen Standbeutels, wobei der Einfüllstutzen mit dem Standbeutel heißverschweißt wird.

Aus dem Artikel "Studies on Ultrasonic Plastic Welding with Two Longituidinal Vibration Systems" von Jiromaru Tsujino, Japanese Journal of Applied Physics, 24(1985), ist eine Ultraschallschweißvorrichtung bekannt, wobei zwei Sonotroden mit einmal 20 kHz und einmal 27 kHz verwendet werden.

Ausgehend von dem beschriebenen Stand der Technik ist es daher Aufgabe der vorliegenden Erfindung, eine Ultraschallschweißvorrichtung anzugeben, die eine effektive Materialbearbeitung erlaubt, ohne dass es zu einer unerwünschten Wechselwirkung zwischen den beiden Sonotroden kommt.

Erfindungsgemäß wird diese Aufgabe dadurch gelöst, dass die zumindest zwei Sonotroden derart aufgebaut sind, dass die erste Sonotrode mit einer Eigenfrequenz $f_{s1}$ und die zweite Sonotrode mit einer Eigenfrequenz $f_{s2}$ angeregt werden kann, wobei $f_{s2}$ größer als $f_{s1}$ ist, wobei mindestens eine dritte Sonotrode vorgesehen ist, wobei die dritte Sonotrode derart angeordnet ist, dass das zu bearbeitende Material während der Bearbeitung zwischen mindestens einer Sonotrode einerseits und zumindest zwei Sonotroden andererseits positioniert wird, und wobei die Gesamtfläche der auf einer Seite des zu bearbeitenden Materials positionierten Sonotrode in etwa der Gesamtfläche der auf der anderen Seite des zu bearbeitenden Materials positionierten Sonotroden entspricht. Daher sollte die erste und die zweite Sonotrode auch jeweils einen entsprechend ausgelegten Konverter haben, welcher die jeweilige Eigenfrequenz zur Verfügung stellt. Mit anderen Worten wird im Betrieb die eine Sonotrode in eine Ultraschallschwingung $f_{s1}$ und die andere Sonotrode in eine Ultraschallschwingung $f_{s2}$ versetzt.

Kommt es nun während der Bearbeitung des Materials dazu, dass die Ultraschallschwingung der einen Sonotrode über das Material auf die andere Sonotrode übertragen wird, so trifft diese dort nicht auf eine passende Eigenfrequenz, sodass die erste Sonotrode das Schwingungsverhalten der zweiten Sonotrode praktisch nicht beeinflusst.

Zweckmäßigerweise ist die Sonotrode derart aufgebaut, dass $f_{s2}$ kein ganzzahliges Vielfaches von $f_{s1}$ ist. Wäre nämlich die Eigenfrequenz der zweiten Sonotrode ein ganzzahliges Vielfaches der Eigenfrequenz der ersten Sonotrode, so könnte es zu einer Anregung von höheren harmonischen Schwingungen kommen und dadurch zu einer negativen Beeinflussung der beiden Sonotroden untereinander.

In der Praxis hat sich gezeigt, dass am besten $\frac{f_{S2}-f_{S1}}{f_{S1}} \leq 0{,}4$ und vorzugsweise $\frac{f_{S2}-f_{S1}}{f_{S1}} \leq 0{,}2$ ist.

Beispielsweise könnte die erste Sonotrode mit einer Frequenz $f_{s1}$ von 30 kHz angeregt werden, während die zweite Sonotrode mit einer Frequenz $f_{s2}$ von 35 kHz angeregt wird. Die 30 kHz Schwingung ist weit genug von der 35 kHz Eigenfrequenz der zweiten Sonotrode entfernt, sodass es zu nahezu keinem Energieübertrag zwischen der ersten Sonotrode einerseits und der zweiten Sonotrode andererseits kommt.

Durch die unterschiedlichen Schwingungsfrequenzen kann die Ultraschallbearbeitung deutlich verbessert werden, da nun die Schwingungsamplitude einer Sonotrode eingestellt werden kann, ohne dass dies einen Einfluss auf die Schwingungsamplitude der anderen Sonotrode hat.

In einer weiteren besonders bevorzugten Ausführungsform ist vorgesehen, dass die mindestens zwei Sonotroden jeweils zumindest einen ebenen Siegelflächenabschnitt aufweisen.

In einer bevorzugten Ausführungsform lassen sich die Sonotroden relativ zueinander zwischen einer offenen Position, in der die beiden Siegelflächen weit voneinander beabstandet sind und in der das zu bearbeitenden Material weiter transportiert werden kann, und einer geschlossenen Position, in der die beiden Siegelflächen nah beieinander angeordnet sind und in der das zu bearbeitende Material bearbeitet wird, hin und her bewegen.

Bei manchen Anwendungsfällen ist es jedoch notwendig, dass in die Materialbahnen Gegenstände, wie zum Beispiel ein Ausgießer (spout), eingeschweißt wird. In diesem Fall kann die Siegelfläche entsprechende Ausnehmungen aufweisen.

Insbesondere bei dem Einschweißen von Ausgießern in zum Beispiel Getränkepackungen weist mindestens eine Sonotrode, vorzugsweise beide Sonotroden, zumindest einen gekrümmten, vorzugsweise einen konkav gekrümmten, Siegelflächenabschnitt auf. Bei der Bearbeitung des Materials wird dann der einzuschweißende Gegenstand, zum Beispiel der Ausgießer, in den konkav gekrümmten Siegelflächenabschnitt eingelegt.

In einer weiteren bevorzugten Ausführungsform hat mindestens eine Sonotrode und vorzugsweise mindestens zwei Sonotroden zwei ebene Siegelflächenabschnitte und einen zwischen den beiden Siegelflächenabschnitten angeordneten, gekrümmten Siegelflächenabschnitt.

In einer weiteren bevorzugten Ausführungsform sind mindestens drei Sonotroden vorgesehen, wobei die Sonotroden derart angeordnet sind, dass das zu bearbeitende Material zwischen mindestens einer Sonotrode einerseits und zumindest zwei Sonotroden andererseits während der Bearbeitung positioniert wird, wobei vorzugsweise die Gesamtfläche der auf einer Seite des zu bearbeitenden Materials positionierten Sonotrode in etwa der Gesamtfläche der auf der anderen Seite des zu bearbeitenden Materials positionierten Sonotrode entspricht.

Dabei ist es zweckmäßig, wenn die auf derselben Seiten des zu bearbeitenden Materials positionierten Sonotroden voneinander beabstandete Siegelflächen aufweisen.

Auch kann es von Vorteil sein, wenn die Anzahl der auf einer Seite des zu bearbeitenden Materials positionierten Sonotroden von der Anzahl der auf der anderen Seite des zu bearbeitenden Materials positionierten Sonotroden abweicht.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Es zeigen:

Figur 1 eine perspektivische Ansicht eines zwischen zwei Materialbahnen eingelegten Ausgießers,
Figur 2 eine Ansicht der Anordnung von Figur 1 von oben,
Figur 3 eine Ansicht der Anordnung von Figur 1 von vorn,
Figur 4 eine perspektivische Ansicht einer erfindungsgemäßen Ausführungsform,
Figur 5 eine Draufsicht der Ausführungsform von Figur 4 und
Figur 6 eine Seitenansicht der Ausführungsform von Figur 4.

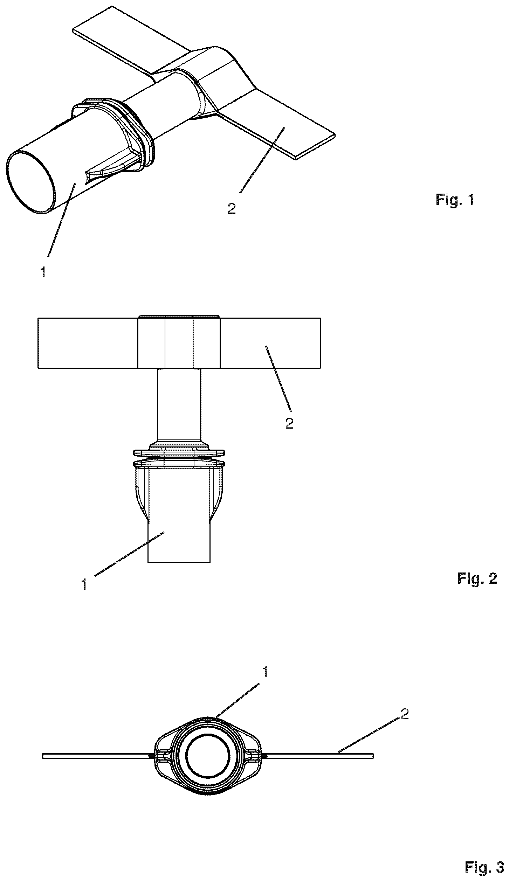

In den Figuren 1 bis 3 ist schematisch ein Ausgießer 1 zwischen zwei Materialbahnen 2 dargestellt. Insbesondere Getränke aber auch Waschmittel werden häufig in Kunststoffbeuteln verkauft, in die ein Ausgießer, ein sogenannter Spout, eingeschweißt ist. Diese Einschweißung kann beispielsweise mit Hilfe einer Ultraschallschweißvorrichtung erfolgen.

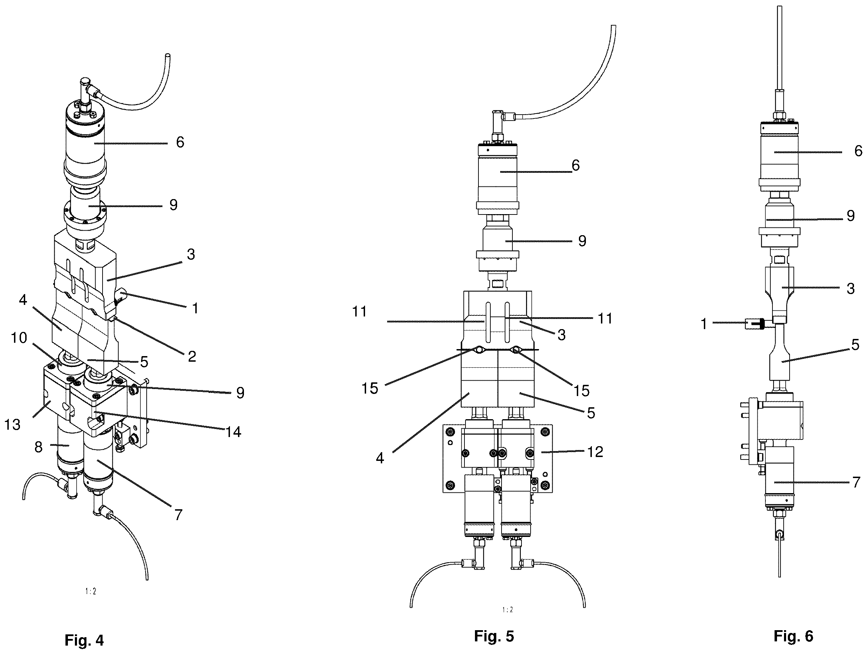

Eine Ausführungsform gemäß der Erfindung ist in den Figuren 4 bis 6 gezeigt. In Figur 4 ist eine perspektivische Ansicht, in Figur 5 eine Vorderansicht und in Figur 6 eine Seitenansicht der Ultraschallschweißvorrichtung gezeigt.

Die Ultraschallschweißvorrichtung weist insgesamt drei Sonotroden 3, 4, 5 auf. Eine Sonotrode 3 ist über einen Amplitudentransformator 9 mit einem Konverter 6 verbunden. Der Konverter 6 wandelt eine elektrische Wechselspannung in eine mechanische Ultraschallschwingung um. In der Regel weist er hierzu Piezokristalle auf.

Der Amplitudentransformator 9, der nicht unbedingt erforderlich ist, wandelt die Amplitude der Ultraschallschwingung um, nicht jedoch die Frequenz. Durch den Konverter 6 kann somit die Sonotrode 3 in eine Eigenschwingung versetzt werden. Die Sonotrode 3 weist zwei Schlitze 11 auf, die die Materialverformung innerhalb der Sonotrode während der Ultraschallschwingung reduzieren.

Die beiden anderen Sonotroden 4 und 5 sind jeweils über einen Amplitudentransformator 9, 10 mit einem Konverter 7, 8 verbunden. Jede der beiden Sonotroden 4, 5 kann somit mittels eines der Konverter 7, 8 in eine Ultraschalleigenschwingung versetzt werden. Die beiden Sonotroden 4, 5 haben eine Eigenfrequenz, die mit den Konvertern 7, 8 angeregt wird, die sich von der Eigenfrequenz der Sonotrode 3 unterscheidet.

Die beiden Sonotroden 4, 5 sind mit Hilfe der Halter 13, 14 mit einer Befestigungsplatte 12 verbunden. Die Sonotroden 4, 5 sind somit - abgesehen von der Schwingung - unbeweglich.

Die Sonotrode 3 hingegen kann relativ zu den Sonotroden 4, 5 zwischen einer geöffneten Stellung (nicht gezeigt) und einer geschlossenen bzw. Bearbeitungsstellung, wie sie in den Figuren 4 bis 6 gezeigt ist, hin und her bewegt werden. Sowohl die Sonotrode 3 als auch die Sonotroden 4, 5 haben sowohl ebene Siegelflächenabschnitte als auch konkav gekrümmte Siegelflächenabschnitte. Diese sind derart angeordnet, dass sich in der in den Figuren 4 bis 6 gezeigten Bearbeitungsstellung zwischen den Sonotroden 3 und 4 bzw. 3 und 5 jeweils ein Durchgang 15 bildet, dessen Kontur im Wesentlichen der Kontur des Ausgießers 1 entspricht.

In der geöffneten Stellung kann daher eine Materialbahn mit zwei Ausgießern an die konkaven Siegelflächenabschnitte der Sonotroden 4, 5 gelegt werden, sodass in der nachfolgenden Bearbeitungsposition die Materialbahn 2 mit den Ausgießern 1 verschweißt werden kann.

Durch die Verwendung von zwei Sonotroden, die mit unterschiedlichen Schwingungsfrequenzen beaufschlagt werden, kann eine effektive Verschweißung zwischen der Materialbahn 2 und den Ausgießern 1 erfolgen.

**Bezugszeichenliste**

| 1 | Ausgießer |
|------|---------------------------|
| 2 | Materialbahnen |
| 3, 4, 5 | Sonotrode |
| 6, 7, 8 | Konverter |
| 9, 10 | Amplitudentransformator |
| 11 | Schlitze |
| 12 | Befestigungsplatte |
| 13, 14 | Halter |
| 15 | Durchgang |

**Patentansprüche**

1. Ultraschallschweißvorrichtung zur Ultraschallbearbeitung eines Materials mit mindestens zwei Sonotroden (3, 4) und einer Konvertereinrichtung (6, 7, 8), die eine elektrische Wechselspannung in eine Ultraschallschwingung umwandelt und die mindestens zwei Sonotroden (3, 4) in eine Ultraschallschwingung versetzt, wobei die mindestens zwei Sonotroden (3, 4) derart angeordnet sind, dass das zu bearbeitende Material während der Bearbeitung zwischen diesen angeordnet wird und gleichzeitig von den mindestens zwei Sonotroden (3, 4) bearbeitet werden kann, wobei die Konvertereinrichtung (6, 7, 8) die erste Sonotrode mit einer Frequenz $f_{S1}$ und die zweite Sonotrode mit einer Frequenz $f_{S2}$ anregt, wobei $f_{S2}$ größer als $f_{S1}$ ist, **dadurch gekennzeichnet, dass** mindestens eine dritte Sonotrode (5) vorgesehen ist, wobei die dritte Sonotrode (5) derart angeordnet ist, dass das zu bearbeitende Material zwischen mindestens einer Sonotrode (3) einerseits und zumindest zwei Sonotroden (4, 5) andererseits während der Bearbeitung positioniert wird, und wobei die Gesamtfläche der auf einer Seite des zu bearbeitenden Materials positionierten Sonotrode (3) in etwa der Gesamtfläche der auf der anderen Seite des zum bearbeitenden Materials positionierten Sonotroden (4, 5) entspricht.

2. Ultraschallschweißvorrichtung nach Anspruch 1, **dadurch gekennzeichnet, dass** $f_{S2}$ kein ganzzahliges Vielfaches von $f_{S1}$ ist.

3. Ultraschallschweißvorrichtung nach Anspruch 1 oder 2, **dadurch gekennzeichnet, dass** $\frac{f_{S2}-f_{S1}}{f_{S1}} \leq 0{,}4$ und vorzugsweise $\frac{f_{S2}-f_{S1}}{f_{S1}} \leq 0{,}2$ ist.

4. Ultraschallschweißvorrichtung nach einem der Ansprüche 1 bis 3, **dadurch gekennzeichnet, dass** die mindestens zwei Sonotroden (3,4) jeweils zumindest einen ebenen Siegelflächenabschnitt aufweisen.

5. Ultraschallschweißvorrichtung nach einem der Ansprüche 1 bis 4, **dadurch gekennzeichnet, dass** mindestens eine Sonotrode, vorzugsweise mindestens zwei Sonotroden (3, 4), zumindest einen gekrümmten, vorzugsweise konkav gekrümmten Siegelflächenabschnitt aufweist.

6. Ultraschallschweißvorrichtung nach Anspruch 5, **dadurch gekennzeichnet, dass** mindestens eine Sonotrode und vorzugsweise die mindestens zwei Sonotroden (3, 4) zwei ebene Siegelflächenabschnitte und einen zwischen den beiden Siegelflächenabschnitten angeordneten, gekrümmten, vorzugsweise konkav gekrümmten Siegelflächenabschnitt aufweist.

7. Ultraschallschweißvorrichtung nach einem der Ansprüche 1 bis 6, **dadurch gekennzeichnet, dass** die auf derselben Seite des zu bearbeitenden Materials positionierten Sonotroden (4, 5) voneinander beabstandete Siegelflächen aufweisen.

**Claims**

1. An ultrasonic welding apparatus for ultrasonic machining of a material comprising at least two sonotrodes (3, 4) and a converter device (6, 7, 8) which converts an electrical AC voltage into an ultrasonic vibration and causes the at least two sonotrodes (3, 4) to perform ultrasonic vibration, wherein the at least two sonotrodes (3, 4) are so arranged that the material to be machined is disposed between them during the machining operation and can be machined at the same time by the at least two sonotrodes (3, 4), wherein the converter device (6, 7, 8) excites the first sonotrode at a frequency $f_{S1}$ and the second sonotrode at a frequency $f_{S2}$, wherein $f_{S2}$ is greater than $f_{S1}$, **characterised in that** there is provided at least one third sonotrode (5), wherein the third sonotrode (5) is so arranged that the material to be machined is positioned between at least one sonotrode (3) on the one hand and at least two sonotrodes (4, 5) on the other hand during the machining operation and wherein the total surface area of the sonotrode (3) positioned on one side of the material to be machined approximately corresponds to the total surface area of the sonotrodes (4, 5) positioned on the other side of the material to be machined.

2. An ultrasonic welding apparatus as set forth in claim 1 **characterised in that** $f_{S2}$ is not an integral multiple of $f_{S1}$.

3. An ultrasonic welding apparatus as set forth in claim 1 or claim 2 **characterised in that**

$$\frac{f_{S2} - f_{S1}}{f_{S1}} \le 0.4$$ and preferably

$$\frac{f_{S2} - f_{S1}}{f_{S1}} \le 0.2.$$

4. An ultrasonic welding apparatus as set forth in one of claims 1 through 3 **characterised in that** the at least two sonotrodes (3, 4) respectively have at least one flat sealing surface portion.

5. An ultrasonic welding apparatus as set forth in one of claims 1 through 4 **characterised in that** at least one sonotrode, preferably at least two sonotrodes (3, 4), has at least one curved, preferably concavely curved sealing surface portion.

6. An ultrasonic welding apparatus as set forth in claim 5 **characterised in that** at least one sonotrode and preferably the at least two sonotrodes (3, 4) has two flat sealing surface portions and a curved, preferably concavely curved sealing surface portion arranged between the two sealing surface portions.

7. An ultrasonic welding apparatus as set forth in one of claims 1 through 6 **characterised in that** the sonotrodes (4, 5) positioned on the same side of the material to be machined have mutually spaced sealing surfaces.

**Revendications**

1. Dispositif de soudage par ultrasons pour le traitement par ultrasons d'un matériau, avec au moins deux sonotrodes (3, 4) et un dispositif de conversion (6, 7, 8) qui convertit une tension électrique alternative en une oscillation d'ultrasons et qui fait osciller en ultrasons lesdites au moins deux sonotrodes (3, 4), lesdites au moins deux sonotrodes (3, 4) étant disposées de façon telle que le matériau à traiter soit disposé entre celles-ci pendant le traitement et puisse être traité en même temps par lesdites au moins deux sonotrodes (3, 4), le dispositif de conversion (6, 7, 8) faisant osciller la première sonotrode avec une fréquence $f_{S1}$ et la deuxième sonotrode avec une fréquence $f_{S2}$, $f_{S2}$ étant supérieure à $f_{S1}$, **caractérisé en ce qu'**il est prévu au moins une troisième sonotrode (5), la troisième sonotrode (5) étant disposée de façon telle que le matériau à traiter soit positionné pendant le traitement entre au moins une sonotrode (3) d'une part et au moins deux sonotrodes (4, 5) d'autre part, et la surface totale de la sonotrode (3) positionnée sur un côté du matériau à traiter correspondant à peu près à la surface totale des sonotrodes (4, 5) positionnées sur l'autre côté du matériau à traiter.

2. Dispositif de soudage par ultrasons selon la revendication 1, **caractérisé en ce que** $f_{S2}$ n'est pas un multiple entier de $f_{S1}$.

3. Dispositif de soudage par ultrasons selon la revendication 1 ou 2, **caractérisé en ce que**

$$\frac{f_{S2} - f_{S1}}{f_{S1}} \leq 0{,}4 \quad \text{et de préférence}$$

$$\frac{f_{S2} - f_{S1}}{f_{S1}} \leq 0{,}2 \; .$$

4. Dispositif de soudage par ultrasons selon l'une des revendications 1 à 3, **caractérisé en ce que** lesdites au moins deux sonotrodes (3, 4) comprennent chacune au moins une zone plane de surface de scellage.

5. Dispositif de soudage par ultrasons selon l'une des revendications 1 à 4, **caractérisé en ce qu'**au moins une sonotrode, de préférence au moins deux sonotrodes (3, 4), comprend une zone de surface de scellage courbée, de préférence courbée concave.

6. Dispositif de soudage par ultrasons selon la revendication 5, **caractérisé en ce qu'**au moins une sonotrode, et de préférence lesdites au moins deux sonotrodes (3, 4), comprend deux zones de surface de scellage planes et une zone de surface de scellage courbée, de préférence courbée concave, disposée entre les deux zones de surface de scellage.

7. Dispositif de soudage par ultrasons selon l'une des revendications 1 à 6, **caractérisé en ce que** les sonotrodes (4, 5) positionnées sur un même côté du matériau à traiter comprennent des surfaces de scellage espacées les unes des autres.

Fig. 1

Fig. 2

Fig. 3

Fig. 4

Fig. 5

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2010145927 A
- EP 2263860 A1
- JP S59178215 A
- EP 0661208 A1
- JP H07323478 B

### In der Beschreibung aufgeführte Nicht-Patentliteratur

- **JIROMARU TSUJINO.** Studies on Ultrasonic Plastic Welding with Two Longituidinal Vibration Systems. *Japanese Journal of Applied Physics,* 1985, vol. 24